# EUROPEAN PATENT SPECIFICATION

(11) **EP 3 269 024 B1**
(45) Date of publication and mention of the grant of the patent: **28.04.2021**
(21) Application number: 16761148.2
(22) Date of filing: 10.03.2016
(51) Int. Cl.: H02K 1/30, H02K 1/18, H02K 21/00

(54) **A WHEEL FOR ELECTRICAL MACHINERY**
RAD FÜR ELEKTRISCHE MASCHINEN
ROUE POUR MACHINERIE ÉLECTRIQUE

(30) Priority: 12.03.2015 FI 20155164
(43) Date of publication of application: 17.01.2018
(73) Proprietor: Lappeenrannan-Lahden teknillinen yliopisto LUT, 53850 Lappeenranta (FI)
(72) Inventor: SEMKEN, Scott, 53850 Lappeenranta (FI)
(74) Representative: Espatent Oy
(86) International application number: PCT/FI2016/050144
(87) International publication number: WO 2016/142585

(56) References cited:
- EP-A2- 0 726 637
- WO-A1-97/14207
- WO-A1-02/099950
- WO-A1-2014/204469
- FR-A- 667 294
- GB-A- 341 666
- GB-A- 2 505 472
- GB-A- 2 505 472
- US-A- 1 677 030
- US-A- 2 469 808
- US-A1- 2014 152 136

## Description

### TECHNICAL FIELD

The present invention generally relates to electrical machinery.

### BACKGROUND ART

This section illustrates useful background information without admission of any technique described herein representative of the state of the art.

In electrical machinery, the stator and rotor wheel structures must work together to resist the large forces acting upon their facing surfaces. Since the air gap must be kept small to optimize efficiency, the structures must hold radial deformations to an absolute minimum. Furthermore, dynamic performance is important. Particularly, as a generator diameter becomes larger, dynamic response and the mass of the structures become more of an issue.

US 1677030 discloses a magnet wheel, where the rim of the wheel is formed by two series of rim segments which are secured by bolts to outer faces of the spokes. GB 2505472 discloses a plurality of rotor and stator wheel structures.

### SUMMARY

According to the invention there is provided a wheel of a rotor or a stator of an electrical machine according to claim 1.

In certain example embodiments, the layered sheet metal elements comprise overlapping parts so that a first layered sheet metal element contains a part extending in between an adjacent layered sheet metal element.

In certain example embodiments, the layered sheet metal elements are assembled together forming a staggered structure.

According to the invention, an individual layered sheet metal element comprises a plurality of stacked sheet metal layers and forms at least one spoke and a section of the rim.

In certain example embodiments, the number of spokes formed by the individual sheet metal element is two.

In certain example embodiments, the wheel comprises a structure configured to minimize radial deformation of the wheel.

In certain example embodiments, the wheel uses a slanted spoke and rim architecture to provide good static structural performance with minimum weight. In certain example embodiments, the spokes are slanted and they come out from the hub tangentially.

In certain example embodiments, layered sheet metal elements are used to form the spokes and rim of wheel faces.

In certain example embodiments, the layered sheet metal elements are made of steel.

In certain example embodiments, the layered (stacked) sheet steel elements, when bound, establish structural integrity with an increase in structural damping perpendicular to the stack due to friction between the layers. With use of the layered sheet metal elements, substantial spoke-and-rim wheel structures can be built up without welding together overly thick steel elements.

According to a second example aspect of the invention, there is provided an electrical machine comprising the wheel of the first aspect or of any of its embodiments.

According to a third example aspect of the invention, there is provided an electrical machine comprising a first wheel attached to a hub by spokes and a second wheel attached to the hub by spokes, wherein at least one of said first and second wheels comprise a rim and spokes formed by layered sheet metal elements assembled together, and wherein the second wheel is placed around the first wheel.

In certain example embodiments, both of said first and second wheels comprise a rim and spokes formed by layered sheet metal elements assembled together.

The electrical machine may be, for example, a generator or an electrical motor.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

Some example embodiments of the invention will be described with reference to the accompanying drawings, in which:
- Fig. 1: shows a view of a wheel of an electrical machine in accordance with an example embodiment;
- Figs. 2-4: show certain parts of the wheel of Fig. 1;
- Fig. 5: shows a rim assembly in accordance with an example embodiment;
- Figs. 6-7: show certain structural details of the wheel of Fig. 1;
- Fig. 8: shows structural deformations in an example embodiment; and
- Fig. 9: shows an electrical machine in accordance with an example embodiment.

### DETAILED DESCRIPTION

In the following description, like reference signs denote like elements or steps.

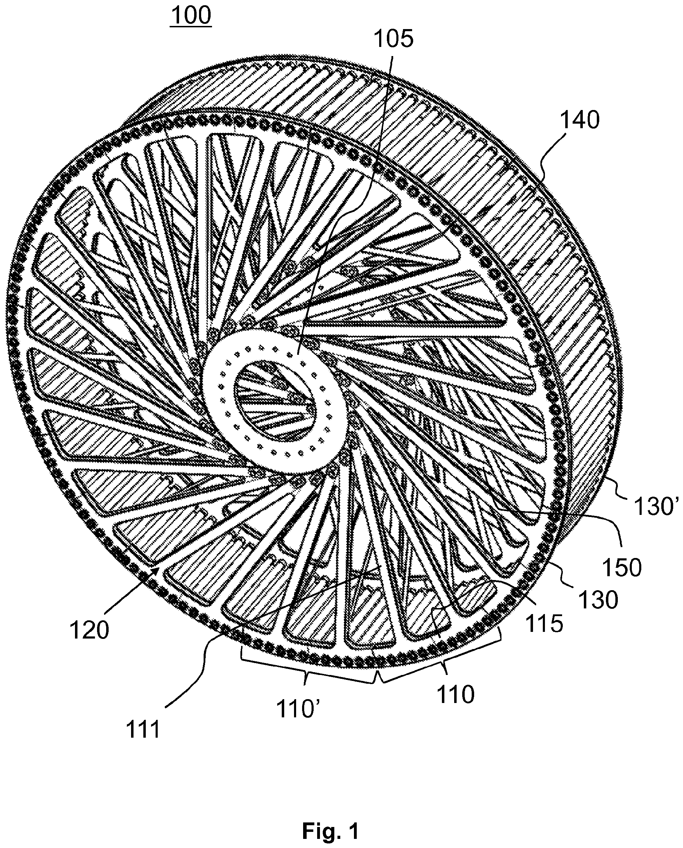

Fig. 1 shows a view of a wheel of an electrical machine, for example an electrical motor or generator, in accordance with an example embodiment. The wheel 100 comprises a hub 105 and a rim 115 connected by spokes 111. The rim 115 is formed by layered sheet metal elements 110, 110' assembled together.

The sheet metal elements 110, 110' are stacked to form a wheel face 120 with spokes 111 and rim 115. A pair of wheel faces 120 is attached to the hub 105 (one on each side of a hub plate, such as an inner hub plate, or similar) resulting in a wheel structure side 130. A pair of wheel structure sides 130, 130' is spaced apart at an interval defined by the hub 105. A circular array of crossing tubes 140 connects the two wheel structure sides 130, 130' at the rim 115 to form a complete lightweight wheel structure (the crossing tubes 140 also keep the layered sheet metal elements 110, 110' in position). The structure is stiffened axially with internal cross bracing (bracing straps 150) extending between the wheel structure sides 130, 130'.

Spacers (not shown in Fig. 1) sit between the pair of wheel faces 120 of the wheel structure side 130 (and between the pair of wheel faces of the wheel structure side 130', respectively) in line with the spokes 111 to maintain the spacing established by the hub (or hub plate) 105. The spacers may be, for example, of polymer material (such as high density polyethylene) to introduce structural damping in the axial direction of the wheel 100.

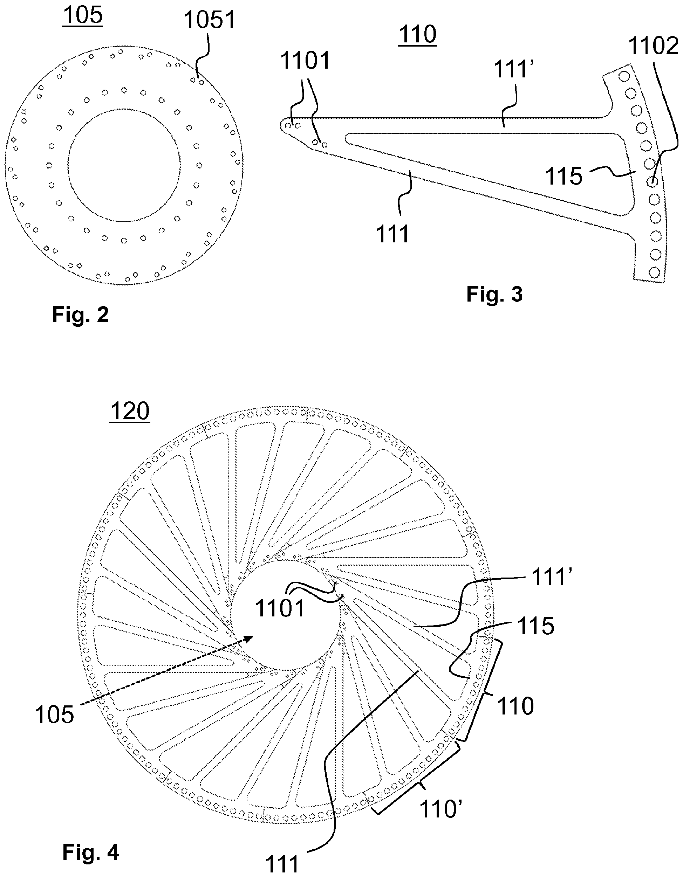

Figs. 2-4 show side views of certain parts of the wheel 100.

Fig. 2 shows a side view of the hub 105 comprising attachment points 1051 (e.g., holes) for attaching the layered sheet metal elements 110, 110' to the hub 105.

Fig. 3 shows a side view of the layered sheet metal element 110 (or 110', respectively). The element 110 forms a section of the entire wheel 100.

The layered sheet metal element 110 comprises a portion of the rim 115 (hereinafter denoted as rim portion 115) and at least one spoke 111. In this example embodiment, the number of spokes 111, 111' comprised by the element 110 is typically two. The two spokes 111, 111' begin at a common point in the end of the element 110 pointing towards the hub 105. The spokes 111, 111' extend separately (divided by an angle as in letter "V") to meet the rim portion 115 at respective points thus forming a triangle there between (defined by the adjacent spokes 111, 111' and the rim portion 115).

The element 110 comprises attachment points 1101 (e.g., holes) in the end of the element 110 pointing towards the hub 105 for attaching the element 110 to the hub. The element 110 further comprises attachment points 1102 (e.g., holes) in the rim portion 115 for attaching the crossing tubes 140 to the rim portion 115.

The way of attaching parts of the wheel 100 together depends on the implementation. For example bolting, riveting, tying, welding, and/or clinching can be used.

Fig. 4 shows a side view of a wheel face 120. The wheel structure therein uses a spoked-wheel architecture. However, the spokes 111, 111' do not radiate outward normal to the hub 105. Instead, they are slanted and come out from the hub 105 tangentially. This orientation enables the wheel structure to provide good static structural performance with very light weight when the wheel rim is subjected to both tangential and radial forces.

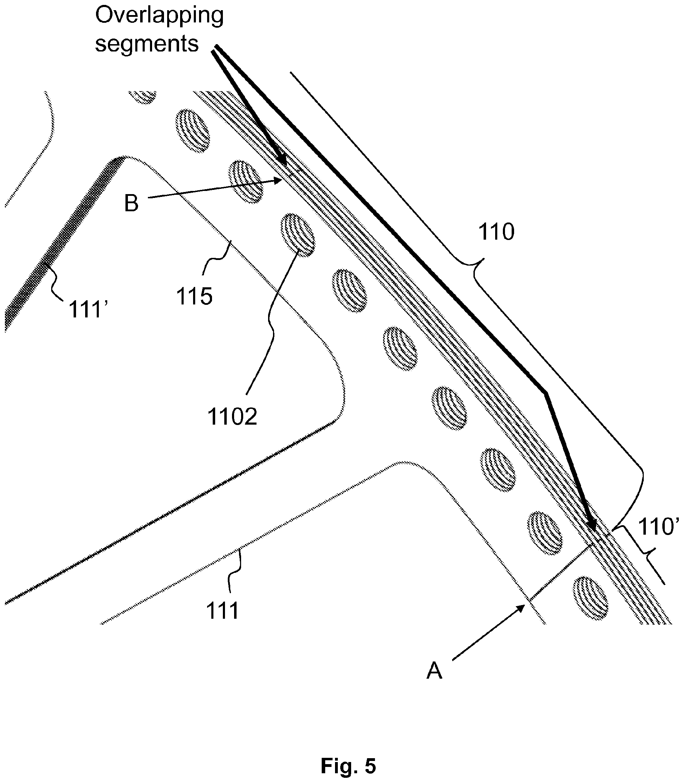

Fig. 5 shows a rim assembly in accordance with an example embodiment. As mentioned in the preceding, the described wheel 100 comprises layered sheet metal elements 110, 110' assembled (or attached) together. The layering of the sheet metal elements introduces damping to the structure, especially in the axial direction.

The layered sheet metal elements may form both the rim 115 and the spokes 111, 111', or in certain example embodiments, the (outer) rim 115 only. The elements 110, 110' form overlapping segments so that the element 110' contains a part extending in between the adjacent element 110. Each layered sheet metal element 110, 110' is formed by stacked sheet metal layers (such as sheet steel layers). The layers of the adjacent elements 110, 110' attach together in a staggered manner at the rim 115. Friction between layers establishes structural integrity. The interaction between layers and the resulting increase in damping normal to the stack offers improved dynamic performance.

In the example of Fig. 5 the number of layers in the elements 110, 110' is five. The basic interface between the adjacent elements 110 and 110' is denoted as "A" and an extended interface located deeper within the area of element 110 as "B". The first, third and fifth layer of the elements 110 and 110' meet at the interface A, whereas the second and fourth layer of the element 110' extend in between the first, third and fifth layer of element 110 till they meet the second and fourth layer of element 110 at the extended interface B.

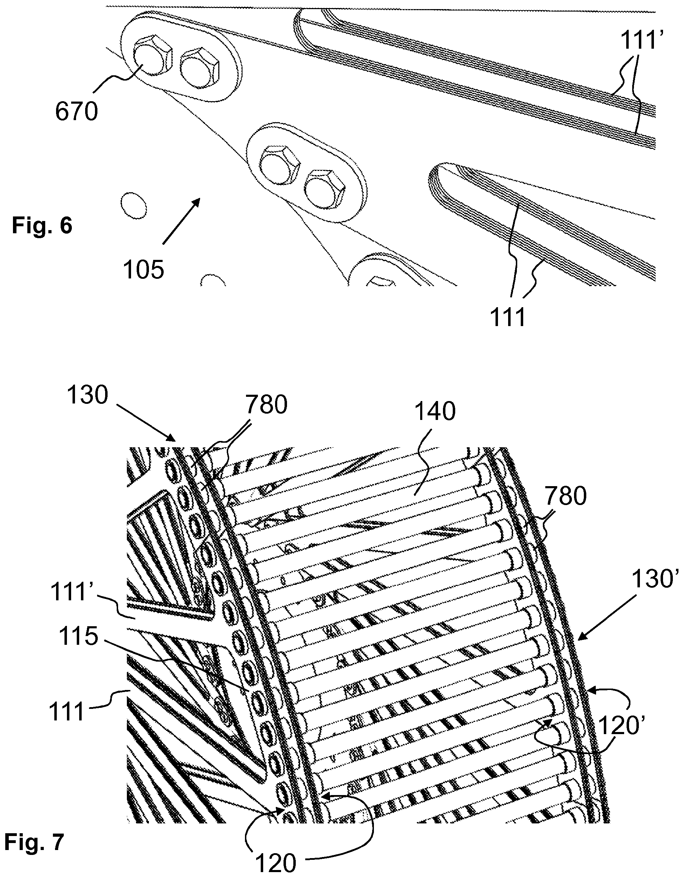

Figs. 6 and 7 show certain structural details of the disclosed wheel 100 in an example embodiment.

Fig. 6 shows the spokes 111, 111' made of sheet metal layers attached to both sides of a respective hub plate 105 by bolts 670.

Fig. 7 shows spacers 780 placed in between the wheel faces 120 of a first wheel structure side 130 as well as between the wheel faces 120' of the other wheel structure side 130'.

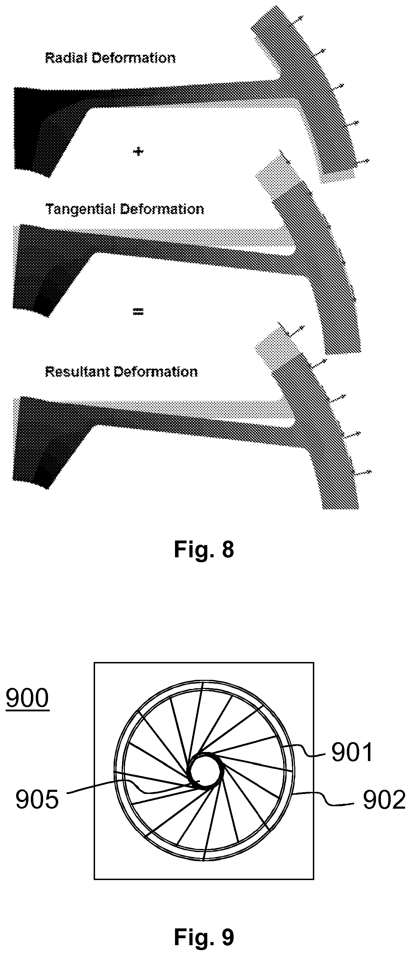

Fig. 8 shows structural deformations in the type of wheel structure with slanted spokes as described in the preceding. Applying radial magnetic forces causes the outer rim of the wheel structure to deform outward. Applying tangential forces pulls the rim back into position. In the same way, slanting the spokes of the outer rotor away from the tangential forces pulls its outer diameter outward in opposition to the inward pull of the magnetic forces, which again results in less overall radial deformation. Spoke deformations due to radial and tangential forces combine to yield a resultant with minimal radial displacement.

Fig. 9 shows an electrical machine in accordance with an example embodiment. The electrical machine 900 comprises a first wheel 901 attached to a hub 905 (e.g., to an inner hub plate) by spokes and a second wheel 902 attached to the hub 905 (e.g., to an outer hub plate) by spokes. The second wheel 902 is placed around the first wheel 901. There is the required air gap in between. The first and second wheels are of the disclosed type. Accordingly, the first and second wheels comprise a rim and spokes formed by the layered sheet metal elements assembled together.

In certain other embodiments, one of the wheels is formed differently. It may, for example, not have the spoke-and-rim architecture at all, or the spokes and/or rim of that wheel need not be formed of layered sheet metal elements.

Various embodiments have been presented. It should be appreciated that in this document, words comprise, include and contain are each used as open-ended expressions with no intended exclusivity.

Without limiting the scope and interpretation of the patent claims, certain technical effects of one or more of the example embodiments disclosed herein are listed in the following: A technical effect is a lightweight layered sheet-steel wheel structure for rotor and stator use in low-speed electrical machinery. Another technical effect is that the deep structural welds that would normally be needed to build up a wheel structure of a large scale are not required with the layered sheet metal architecture. As a result, issues with fatigue cracking and failure at the welds over the life expectancy of the structure are eliminated and manufacturing costs are reduced. Another technical effect is increase in structural damping due to friction between the layered sheet metal elements that establishes structural integrity.

The foregoing description has provided by way of non-limiting examples of particular implementations and embodiments of the invention a full and informative description of the best mode presently contemplated by the inventor for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A wheel (100) of a rotor or stator of an electrical machine, comprising:
a hub (105) and a rim (115) connected by spokes (111), wherein the rim being formed by layered sheet metal elements (110, 110') assembled together, wherein an individual layered sheet metal element (110, 110') comprises a plurality of stacked sheet metal layers, **characterized in that** each of the stacked sheet metal layers forms a section of the rim (115) and at least one spoke (111, 111').

2. The wheel of claim 1, wherein the layered sheet metal elements (110, 110') comprise overlapping parts so that a first layered sheet metal element comprises a layer extending in between layers of an adjacent layered sheet metal element.

3. The wheel of claim 1 or 2, wherein the layered sheet metal elements (110, 110') are assembled together forming a staggered structure.

4. The wheel of any preceding claim, wherein the number of layers in the layered sheet metal elements (110, 110') is five.

5. The wheel of any preceding claim, wherein the number of spokes (111, 111') formed by the individual sheet metal element (110, 110') is two.

6. The wheel of any preceding claim, wherein the spokes (111, 111') are slanted and they come out from the hub tangentially.

7. The wheel of any preceding claim, wherein the layered sheet metal elements (110, 110') are made of steel.

8. An electrical machine (900) comprising the wheel (100) of any preceding claim.

9. An electrical machine (900) comprising a first wheel (901) attached to a hub (905) by spokes and a second wheel (902) attached to the hub by spokes, wherein at least one of said first and second wheels is a wheel (100) according to any one of claims 1-7, and wherein the second wheel is placed around the first wheel.

## Patentansprüche

1. Rad (100) eines Rotors oder Stators einer elektrischen Maschine, umfassend:
eine Nabe (105) und eine Felge (115), die durch Speichen (111) verbunden sind,
wobei die Felge durch geschichtete Metallblechelemente (110, 110') gebildet ist, die zusammengesetzt sind,
wobei ein einzelnes geschichtetes Metallblechelement (110, 110') eine Vielzahl gestapelter Metallblechschichten umfasst,
**gekennzeichnet dadurch, dass** jede der gestapelten Metallblechschichten einen Abschnitt der Felge (115) und wenigstens eine Speiche (111, 111') bildet.

2. Rad nach Anspruch 1, wobei die geschichteten Metallblechelemente (110, 110') überlappende Teile umfassen, so dass ein erstes geschichtetes Metallblechelement eine Schicht umfasst, die sich zwischen Schichten eines benachbarten geschichteten Metallblechelements erstreckt.

3. Rad nach Anspruch 1 oder 2, wobei die geschichteten Metallblechelemente (110, 110') zusammengesetzt sind, bildend eine versetzte Struktur.

4. Rad nach einem vorhergehenden Anspruch, wobei die Anzahl Schichten in den geschichteten Metallblechelementen (110, 110') fünf beträgt.

5. Rad nach einem vorhergehenden Anspruch, wobei die Anzahl Speichen (111, 111'), gebildet durch das einzelne Metallblechelement (110, 110'), zwei beträgt.

6. Rad nach einem vorhergehenden Anspruch, wobei die Speichen (111, 111') geneigt sind und sie tangential aus der Nabe herauskommen.

7. Rad nach einem vorhergehenden Anspruch, wobei die geschichteten Metallblechelemente (110, 110') aus Stahl hergestellt sind.

8. Elektrische Maschine (900), umfassend das Rad (100) nach einem vorhergehenden Anspruch.

9. Elektrische Maschine (900), umfassend ein erstes Rad (901), das durch Speichen an einer Nabe (905) befestigt ist, und ein zweites Rad (902), das durch Speichen an der Nabe befestigt ist, wobei wenigstens eines des ersten und zweiten Rades ein Rad (100) nach einem der Ansprüche 1-7 ist und wobei das zweite Rad um das erste Rad angeordnet ist.

## Revendications

1. Une roue (100) d'un rotor ou d'un stator d'une machine électrique, comprenant :
un moyeu (105) et une jante (115) reliés par des rayons (111), la jante étant formée par des éléments en feuilles métalliques stratifiées (110, 110') assemblés les uns aux autres, un élément en feuilles métalliques stratifiées individuel (110, 110') comprenant une pluralité de couches de feuilles métalliques empilées, **caractérisée en ce que** chacune des couches de feuilles métalliques empilées forme une portion de la jante (115) et au moins un rayon (111, 111').

2. La roue selon la revendication 1, dans laquelle les éléments en feuilles métalliques stratifiées (110, 110') comprennent des parties en chevauchement de sorte qu'un premier élément en feuilles métalliques stratifiées comprend une couche s'étendant entre des couches d'un élément en feuilles métalliques stratifiées adjacent.

3. La roue selon la revendication 1 ou la revendication 2, dans laquelle les éléments en feuilles métalliques stratifiées (110, 110') sont assemblés les uns aux autres de façon à former une structure en quinconce.

4. La roue selon l'une quelconque des revendications précédentes, dans laquelle le nombre de couches dans les éléments en feuilles métalliques stratifiées (110, 110') est de cinq.

5. La roue selon l'une quelconque des revendications précédentes, dans laquelle le nombre de rayons (111, 111') formés par l'élément en feuilles métalliques individuel (110, 110') est de deux.

6. La roue selon l'une quelconque des revendications précédentes, dans laquelle les rayons (111, 111') sont inclinés et sortent du moyeu tangentiellement.

7. La roue selon l'une quelconque des revendications précédentes, dans laquelle les éléments en feuilles métalliques stratifiées (110, 110') sont en acier.

8. Une machine électrique (900) comprenant la roue (100) selon l'une quelconque des revendications précédentes.

9. Une machine électrique (900) comprenant une première roue (901) fixée à un moyeu (905) par des rayons et une deuxième roue (902) fixée au moyeu par des rayons, au moins l'une desdites première et deuxième roues étant une roue (100) selon l'une quelconque des revendications 1 à 7, et la deuxième roue étant placée autour de la première roue.
